# EUROPEAN PATENT APPLICATION

(11) **EP 4 752 047 A1**
(43) Date of publication of application: **03.06.2026**
(21) Application number: 25216382.9
(22) Date of filing: 17.11.2025
(51) Int. Cl.: B64C 1/26, B64C 3/26, B64C 3/28, B64F 5/10

(54) **AEROFOIL STRUCTURE**

(30) Priority: 29.11.2024 GB 202417579
(71) Applicant: Airbus Operations Limited, Bristol BS34 7PA (GB)
(72) Inventor: EVANS, Connor, Bristol, BS34 7PA (GB); PAGETT, Jacob, Bristol, BS34 7PA (GB)
(74) Representative: Worthington, Richard Easton

(57) **Abstract**

A method for use in assembling an aerofoil structure. A torsion box has a first mounting feature and a second mounting feature. A fixed leading or trailing edge structure has a third mounting feature and a fourth mounting feature. The first mounting feature and the third mounting feature each have a fastener hole prior to aligning the leading or trailing edge structure to the torsion box. The second mounting feature and the fourth mounting feature are without fastener holes for joining the torsion box to the fixed leading or trailing edge structure prior to aligning the leading or trailing edge structure to the torsion box. The method includes aligning the fixed leading or trailing edge structure to the torsion box so as to align the fastener holes of the first mounting feature and the third mounting feature, drilling through the second mounting feature and the fourth mounting feature to form fastener holes in the second mounting feature and the fourth mounting feature when the fixed leading or trailing edge structure is aligned with the torsion box, and installing a fastener through the fastener holes of the first mounting feature and the third mounting feature, and installing a fastener through the fastener holes of the second mounting feature and the fourth mounting feature, so as to join the fixed leading or trailing edge structure to the torsion box.

## Description

### FIELD OF THE INVENTION

The present invention relates to a kit of parts for forming an aerofoil structure, an aerofoil structure, and a method for use in assembling an aerofoil structure.

### BACKGROUND OF THE INVENTION

Aerofoil structures are found in a variety of aircraft and spacecraft. They typically comprise a torsion box structure, which includes one or more longitudinal spars, a plurality of transverse ribs, and is enclosed by structural covers. A fixed leading edge (FLE) structure and/or a fixed trailing edge (FTE) structure may be attached to the torsion box structure. The assembly of the FLE, FTE and torsion box form an aerofoil shape.

When applied to aircraft wings and stabilizers, the torsion box is often referred to as the "wing box". A wing box construction used commonly in commercial airliners includes a front spar, a rear spar, an upper wing cover (skin) extending between the front spar and the rear spar, and a lower wing cover (skin) extending between the front spar and the rear spar. One or more wing box ribs may also be included between the spars and covers. Each of the front and rear spars may be formed as having, in cross section, a C-section or Z-section (shape) with upper and lower flanges extending from an upstanding web. The upper and lower wing covers may be attached to the flanges of the front and rear spars. FTE and FLE structures of the wing, such as the leading edge having in cross section a D-shaped nose, may be supported by butt-straps attached to overhanging edges of the upper and lower covers.

Modularity of components and major components is used to allow more assembly of these components upstream and before the aircraft final assembly line (FAL). This means that less time is spent assembling these components in the FAL which means the FAL can be more streamlined, efficient, higher rate and with a smaller footprint.

However, FTE and FLE structures currently take a lot of time to assemble and subsequently install to the aircraft wing since little assembly can be done on the FLE and FTE structures ahead of time. Furthermore, due to all of the systems that need to be installed through the FLE and FTE structures, little work can be done on the FLE and FTE structures in parallel with other assembly processes at the FAL (e.g. due to restrictions on parallel drilling elsewhere on the wing).

It is an aim of the present invention to provide a solution to this problem.

### SUMMARY OF THE INVENTION

A first aspect of the invention provides a kit of parts for forming an aerofoil structure including: a torsion box, the torsion box having a first mounting feature and a second mounting feature, and a fixed leading or trailing edge structure attachable to the torsion box, the leading or trailing edge structure having a third mounting feature and a fourth mounting feature, wherein the first mounting feature and the third mounting feature each have a fastener hole prior to aligning the leading or trailing edge structure to the torsion box, and the fastener holes of the first mounting feature and the third mounting feature are configured to receive a fastener for joining the torsion box to the fixed leading or trailing edge structure, and wherein the second mounting feature and the fourth mounting feature are without fastener holes for joining the torsion box to the fixed leading or trailing edge structure prior to aligning the leading or trailing edge structure to the torsion box.

Preferably, at least one of the first mounting feature and third mounting feature include an adjustable fastener hole for adjusting a position and/or orientation of the fastener hole with respect to the first mounting feature or third mounting feature.

Preferably, the adjustable fastener hole includes an eccentric bush.

Preferably, when the leading or trailing edge structure is aligned with the torsion box, the second mounting feature and the fourth mounting feature are provided with aligned fastener holes configured to receive a fastener for joining the torsion box to the fixed leading or trailing edge structure.

Preferably, the fastener holes of the first mounting feature and the third mounting feature have hole axes extending generally in a spanwise direction of the aerofoil structure.

Preferably, the torsion box comprises a spar and the first mounting feature and the second mounting feature each comprise a fitting fixedly attached to a web part of the spar and extending outwardly from the web part of the spar.

Preferably, the fixed leading or trailing edge structure comprises an outer skin, wherein the outer skin is configured such that the outer skin and an aerodynamic cover of the torsion box form a substantially smooth upper aerodynamic surface of the aerofoil structure when the fixed leading or trailing edge structure is attached to the torsion box.

Preferably, the first mounting feature and the third mounting feature are nearer the lower aerodynamic surface of the aerofoil structure than are the second mounting feature and the fourth mounting feature.

Preferably, the outer skin has an opening configured to permit access to the first through fourth mounting features through the opening, and further comprising a cover panel configured to close the opening, wherein the cover panel is configured such that the cover panel and the outer skin form a substantially smooth aerodynamic surface when the cover panel is closing the opening.

Preferably, the fixed leading or trailing edge structure comprises one or more systems for actuating a moveable device comprised in or mountable to the aerofoil structure and/or electrical, hydraulic and/or pneumatic systems.

Preferably, the one or more systems are installed in the fixed leading or trailing edge structure after the second mounting feature and the fourth mounting feature have been provided with fastener holes, and preferably after the fastener holes have been cleaned.

Preferably, the fixed leading or trailing edge structure is of a modular design.

Preferably, the torsion box comprises one or more further pairs of first and second mounting features, and the fixed leading or trailing edge structure further comprises one or more further pairs of third and fourth mounting features, wherein the pairs of first and second mounting features are spaced along the torsion box in the spanwise direction according to a predetermined arrangement corresponding to an arrangement of the pairs of third and fourth mounting features on the fixed leading or trailing edge structure.

A further aspect of the invention provides an aerofoil structure formed from the kit of parts of the first aspect.

A further aspect of the invention provides a method for use in assembling an aerofoil structure, the method comprising: providing a torsion box comprising a first mounting feature and a second mounting feature; providing a fixed leading or trailing edge structure having a third mounting feature and a fourth mounting feature, wherein the first mounting feature and the third mounting feature each have a fastener hole prior to aligning the leading or trailing edge structure to the torsion box, and wherein the second mounting feature and the fourth mounting feature are without fastener holes for joining the torsion box to the fixed leading or trailing edge structure prior to aligning the leading or trailing edge structure to the torsion box; aligning the fixed leading or trailing edge structure to the torsion box so as to align the fastener holes of the first mounting feature and the third mounting feature; drilling through the second mounting feature and the fourth mounting feature to form fastener holes in the second mounting feature and the fourth mounting feature when the fixed leading or trailing edge structure is aligned with the torsion box; installing a fastener through the fastener holes of the first mounting feature and the third mounting feature, and installing a fastener through the fastener holes of the second mounting feature and the fourth mounting feature, so as to join the fixed leading or trailing edge structure to the torsion box.

Preferably, the method further comprises adjusting a position and/or orientation of the fastener hole in the first mounting feature and/or third mounting feature.

Preferably, the torsion box is supported by a first jig, and the fixed leading or trailing edge structure is supported by a second jig during the steps of aligning, drilling and installing fasteners.

Preferably, the fixed leading or trailing edge structure is of a modular design, and the module during the steps of aligning and drilling comprises: a partial structure of the fixed leading or trailing edge structure without an outer skin, or a complete structure of the fixed leading or trailing edge structure with an outer skin, or an equipped complete structure of the fixed leading or trailing edge structure with one or more systems for actuating a moveable device comprised in or mountable to the aerofoil structure and/or electrical, hydraulic and/or pneumatic systems.

Preferably, the method further comprises performing the method for a plurality of the modules spaced along the torsion box in the spanwise direction.

Preferably, the method further comprises cleaning the fastener holes in the second mounting feature and the fourth mounting feature prior to joining the fixed leading or trailing edge structure to the torsion box.

Preferably, the method comprises assembling a kit of parts according to the first aspect.

### BRIEF DESCRIPTION OF THE DRAWINGS

Embodiments of the invention will now be described with reference to the accompanying drawings, in which:
Figure 1 shows a schematic plan view of an aircraft;
Figure 2 shows a schematic plan view of a wing of the aircraft;
Figure 3 shows a partial perspective view of a forward spar of a torsion box of the wing;
Figure 4 shows a partial side view of a the torsion box;
Figure 5 shows a side view of a mounting feature of the torsion box having an adjustable fastener hole;
Figure 6 shows a side view of the partial torsion box and a leading edge structure prior to joining together;
Figure 7 shows a side view of the partial torsion box and the leading edge structure during joining;
Figure 8 shows a side view of the partial torsion box and the leading edge structure during joining;
Figure 9 shows a side view of the partial torsion box joined to the leading edge structure;
Figures 10A, 10B and 10C show various formations of the leading edge structure; and
Figure 11 shows a side view of a partial torsion box for joining to a trailing edge structure of an aircraft wing.

### DETAILED DESCRIPTION OF EMBODIMENT(S)

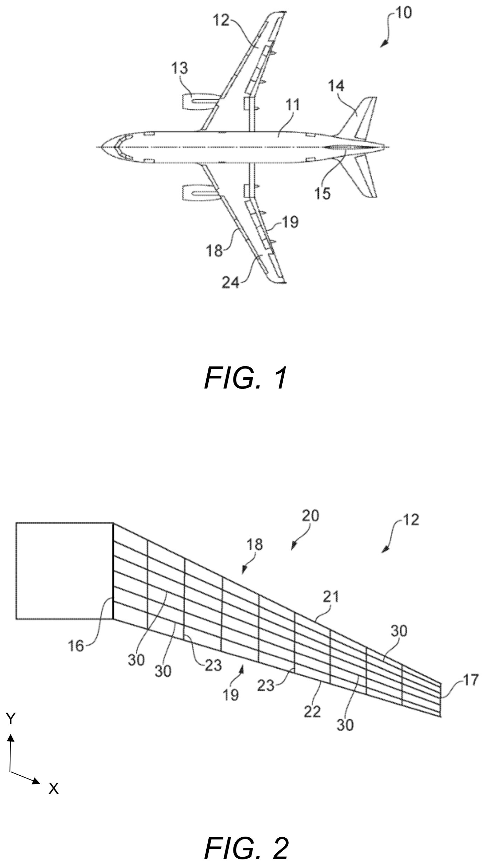

Figure 1 shows an aircraft 10. The aircraft 10 has a fuselage 11, and starboard and port fixed wings 12. An engine 13 is mounted to each wing 12. The aircraft also comprises an empennage (or tail assembly) which includes starboard and port horizontal stabilisers 14 and a vertical stabiliser 15.

In the embodiment illustrated in Figure 1, the aircraft 10 is a typical jet passenger transport aircraft but the invention is applicable to a wide variety of fixed wing aircraft types, including commercial, military, passenger, cargo, jet, propeller, general aviation, etc. with any number of engines 13 attached to the wings 12 or fuselage 11.

A schematic view of a torsion box assembly 20 of the starboard wing 12 is shown in Figure 2. The port wing is similar in construction and so only a description of the starboard wing is provided herein.

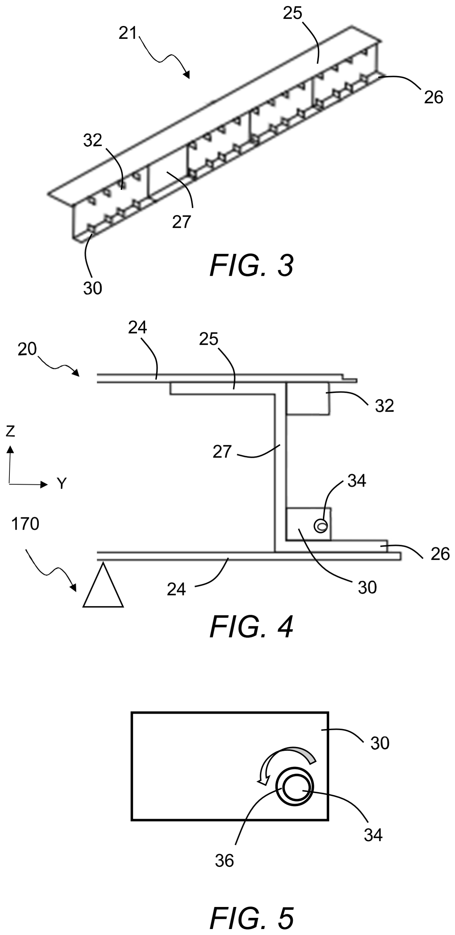

The wing 12 has a cantilevered structure with a length extending in a span-wise direction from a wing root 16 to a wing tip 17, with the wing root 16 being joined to the aircraft fuselage 11. The wing 12 has a leading edge 18 and a trailing edge 19 as shown in Figure 1. The leading edge 18 is at the forward end of the wing 12 and the trailing edge 19 is at the rearward end of the wing 12. The wing 12 comprises the torsion box assembly 20 and leading and trailing edge assemblies (shown in Figure 3).

The leading and trailing edge assemblies may comprise one or more control surfaces (e.g., slats, flaps, ailerons, etc.) for controlling movement of the aircraft 10 about its longitudinal and/or transverse axes.

As shown in Figure 2, the wing 12 has a spanwise axis (X) which extends in a direction from the wing root 16 to the wing tip 17, a chordwise axis (Y) which extends in the direction from the leading edge 18 to the trailing edge 19, and a thickness-wise axis (Z - shown in Figure 4) which extends in a direction perpendicular to the chordwise (Y) and spanwise (X) axes.

The torsion box assembly 20 forms a structural assembly and includes forward and rear spars 21, 22 extending in a spanwise direction between the wing root 16 to the wing tip 17; ribs 23 extending between the forward and rear spars 21, 22 in a chordwise direction; upper and lower aerofoil covers 24 on the upper and lower sides of the torsion box assembly 20; and stringers 30, to which the upper and lower aerofoil covers 24 are mounted. It shall be appreciated that the upper and lower aerofoil covers 24 define the outermost aerodynamic surfaces of the torsion box assembly 20.

Each of the forward 21 and rear 22 spars may be formed as a C or Z section with upper 25 and lower 26 flanges extending from an upstanding web 27, the upper and lower skins 24 of the torsion box assembly 20 being attached to the flanges 25, 26 of the forward 21 and rear 22 spars respectively.

A partial perspective view of the forward spar 21 is shown in Figure 3; and Figure 4 shows the forward spar 21 forming part of the torsion box assembly 20. In Figure 4 only the forward part of the torsion box is shown, supported by a torsion box jig 170. The torsion box assembly 20 has a first mounting feature 30 and a third mounting feature 32. The first mounting feature 30 and the third mounting feature 32 are rigidly coupled to the torsion box assembly 20 and are used for joining the torsion box assembly 20 to a fixed leading edge (FLE) structure. The first and second mounting features 30, 32 are positioned such that they lie on the same vertical plane.

The first mounting feature 30 has fastener hole 34 prior to aligning and joining the FLE structure to the torsion box assembly 20. By contrast the third mounting feature 32 has no fastener hole for joining the torsion box assembly 20 to the FLE structure prior to aligning and joining the FLE structure to the torsion box assembly 20.

Figure 5 shows a detail view of the first mounting feature 30 in which the fastener hole 34 is an optional adjustable fastener hole for adjusting a position and/or orientation of the fastener hole 34 with respect to the first mounting feature 30. The adjustment may be provided by an eccentric bush 36. Rotating the eccentric bush 36 adjusts the position of the fastener hole 34 in the wing Z and Y directions.

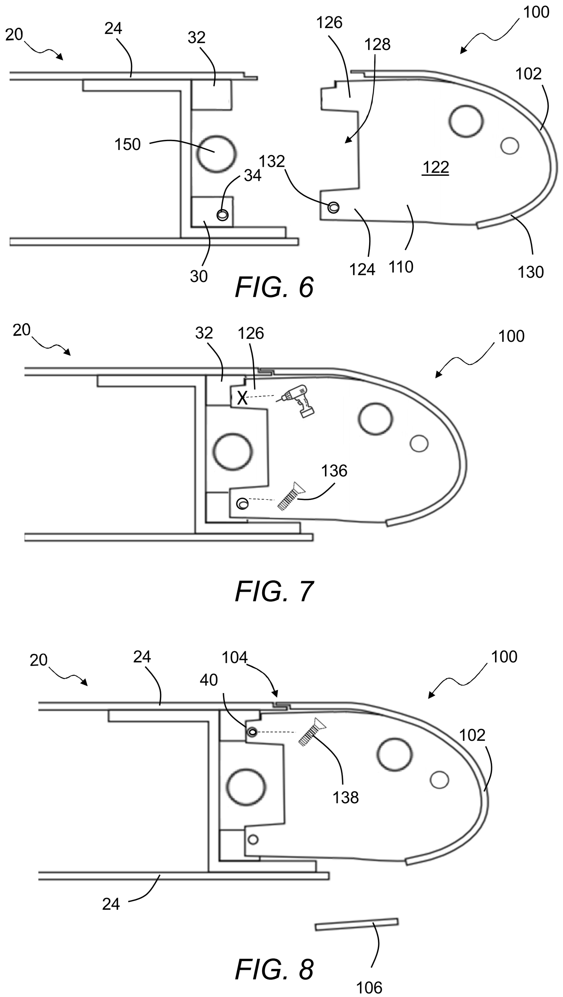

Figure 6 shows a FLE structure 100 for joining to the torsion box assembly 20.

The FLE assembly 100 (sometimes referred to as a leading edge "D-nose" assembly) includes a D-nose cover 102 which defines an aerodynamic surface of the FLE assembly 100 and a plurality of ribs 110 which are disposed at regular intervals in a span-wise direction along the FLE assembly 100. It shall be appreciated that since Figure 6 depicts a section (or side) view of the FLE assembly 100, only one of the aforementioned ribs 110 is visible in Figure 6.

When the FLE structure 100 is attached to the torsion box assembly 20, the D-nose cover 102 sits substantially flush with the upper aerofoil cover 24 of the torsion box assembly 20 such that the D-nose cover 102 and the upper aerofoil cover 24 together form a smooth, aerodynamic surface along the suction side of the aircraft wing 12.

The D-nose cover 102 may comprise aluminium or composite materials, for example. The ribs 110 may comprise aluminium or composite materials, for example.

As shown in Figure 6, the rib 110 is substantially D-shaped when viewed in the spanwise (X-axis) direction and includes a body 122 and a pair of second 124 and fourth 126 mounting features which project rearwardly away from the body 122 in the chordwise (Y-axis) direction towards the forward spar 21 of the torsion box assembly 20.

The second 124 and fourth 126 mounting features are spaced apart in the thickness (Z-axis) direction such that a cavity 128 is defined therebetween for receiving one or more aircraft sub-systems 150. The second and fourth mounting features 124, 126 are positioned such that they lie on the same vertical plane.

The one or more aircraft sub-systems 150 may be electrical sub-systems (e.g., power control systems, signalling control systems etc.), hydraulics sub-systems, hot air bleed sub-systems and/or mechanical sub-systems (e.g., drive-shafts) for actuating one or more control surface of the aircraft 10, such as the slats (not shown).

The second mounting feature 124 has fastener hole 132 prior to aligning and joining the FLE structure 100 to the torsion box assembly 20. By contrast the fourth mounting feature 126 has no fastener hole for joining the torsion box assembly 20 to the FLE structure prior to aligning and joining the FLE structure 100 to the torsion box assembly 20.

The second mounting feature 124 has the fastener hole 132 optionally provided as adjustable fastener hole for adjusting a position and/or orientation of the fastener hole 132 with respect to the second mounting feature 124. The adjustment may be provided by an eccentric bush. Rotating the eccentric bush adjusts the position of the fastener hole 34 in the wing Z and Y directions. The adjustable fastener hole may be the same as described above with reference to Figure 5. One or both of the fastener holes 34, 132 of the first and second mounting features 30, 124 may have the adjustable fastener hole.

In the illustrated embodiment, the first and second mounting features 30, 124 are joined together via their "Hole-to-Hole" connections. A hole-to-hole connection refers to a connection in which a fastener hole is formed in the two (or more) components, in this case the first and second mounting features 30, 124, before said components have been brought together. In other words, the first and second mounting features 30, 124 are brought together and joined for the first time during final assembly so as to join the FLE structure 100 to the torsion box assembly 20.

This differs from so called "Part-to-Part" connections in which the two (or more) components are brought together, aligned and then drilled during the final assembly.

As such, the use of fastener hole (or Hole-to-Hole) connection enables the respective first and second mounting features 30, 124 to be joined without requiring any part drilling during final assembly.

It shall be appreciated that in the illustrated embodiment, the use of more time-consuming "Part-to-Part" connections is reserved for "aerodynamically-critical" regions, such as the connection between the second and fourth mounting features 32, 126 adjacent the upper aerodynamic surface where the flushness of the upper wing cover 32 and the upper trailing edge of the FLE structure 100 is of high importance; whereas less "aero-critical" regions, such as the connection between the first and third mounting features 30, 124 adjacent the lower aerodynamic surface utilises faster "Hole-to-Hole" connections.

In this manner, aircraft assembly times (and hence production throughput) can be improved whilst also maintaining excellent tolerance control at aero-critical regions of the aircraft 10.

As shown in Figure 7, the fastener holes 34, 132 provided in the first and third mounting features 30, 124 extend generally in the spanwise (X-axis) direction and are adjusted until they are aligned when the FLE structure 100 and the torsion box 20 are brought together. The adjustment ensures that the vertical (Z-axis) and fore-aft (Y-axis) alignment of the FLE structure 100 with the torsion box 20 is within a tight tolerance needed to avoid out of tolerance steps and gaps, especially where the D-nose cover 102 overlaps the wing upper cover 24.

Once the correct alignment of the FLE structure 100 with the torsion box 20 and the fastener holes 34, 132 of the first and third mounting features 30, 124 are adjusted to be coaxially aligned to receive a fastener 136), the fastener 136 (which may preferably be a temporary fastener is installed and the second and fourth mounting features 32, 126 can be drilled off.

Drilling through both the overlapping second and fourth mounting features 32, 126 creates a Part-to -Part connection, enabling a high tolerance without relying on the design or production capabilities of the FLE structure 100 or the torsion box 20.

After drilling the Part-to -Part connection, the fastener holes 34, 132 of the first and third mounting features 30, 124 are cleaned or clean reamed. The FLE structure 100 and torsion box 20 may be moved out of alignment for this step, or it may be performed in situ with the parts still aligned. Once the fastener holes 34, 132 are ready for fastening a fastener 138 is installed as shown in Figure 8 (after bringing the parts back into alignment if necessary). If the parts have been disassembled for cleaning the fastener holes 34, 132 then the fastener 136 would need to have been removed to enable the part disassembly and then the fastener 136 installed once more after the parts have been brought back together in alignment. The fastener 136 installation would be a final fastener at this step.

Referring now to the D-nose cover 102, as shown in Figure 8, the upper trailing edge of the D-nose cover 102 is attached to the leading edge of the upper aerofoil cover 24 via a skin or butt joint 104. Both the upper trailing edge of the D-nose cover 102 and the leading edge of the upper aerofoil cover 24 may have a joggle feature to create an overlap region. This joggle connection may be secured by vertical (Z-axis) tension fasteners, or shear fasteners could be used at high load points if needed.

In the illustrated embodiment, the D-nose cover 102 also comprises an access panel 106 (shown as being detached from the D-nose cover 102 in Figure 8), which is provided in a portion of the D-nose cover 102 proximate to the lower aerofoil cover 24, to provide assembly or ground maintenance personnel with access to inside the FLE structure 100. In particular, during the assembly process of joining the FLE structure 100 to the torsion box assembly 20, the access hole revealed when the access panel 106 is removed enables access for adjusting, drilling, fastening and cleaning tools to be introduced into the areas around the first through fourth mounting features 30, 32, 124, 126 to effect the above described adjusting, drilling, cleaning and fastening operations.

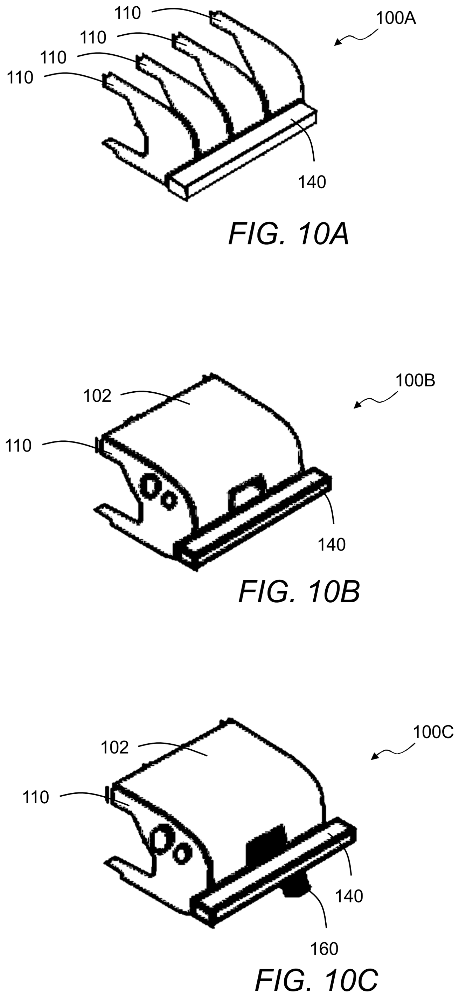

The FLE structure 100 that is joined to the torsion box 20 by the fasteners 136, 138 may take a variety of different forms. Some examples of the FLE structure 100 are shown in Figures 10A, 10B and 10C. The FLE structure 100 may include one or more systems for actuating a moveable device comprised in or mountable to the aircraft wing 12 and/or electrical, hydraulic and/or pneumatic systems.

The FLE structure 100 may be of a modular design. In a first example shown in Figure 10A, the FLE structure 100 is a partial FLE structural module 100A comprising a plurality of the ribs 110 but without the a D-nose cover 102. The plurality of ribs 110 are attached to a common FLE jig 140.

In a second example shown in Figure 10B, the FLE structure 100 is a complete FLE structural module 100B comprising a plurality of the ribs 110 with the a D-nose cover 102 attached to the ribs 110. The FLE structural module 100B is attached to a common FLE jig 140.

In a third example shown in Figure 10C, the FLE structure 100 is a fully equipped FLE structural module 100C comprising a plurality of the ribs 110 with the a D-nose cover 102 attached to the ribs 110, and with one or more systems 160. The systems 160 may be for actuating a moveable device, such as a slat, comprised in or mountable to the aircraft wing 12. The systems 160 may include a slat track mechanism for example. Systems 160 may also be equipped that pass through the module 100C, e.g. electrical, hydraulic and/or pneumatic systems, which may not be related to actuating the moveable device. The FLE structural module 100C is attached to a common FLE jig 140.

Whichever of the FLE modules 100A, 100B or 100C are used, they all comprise multiple ribs 110 each having a pair of third and fourth mounting features 124, 126, identical to those described above. As shown in Figure 3, the torsion box comprises multiple pairs of first and second mounting features 30, 32. The pairs of first and second mounting features 124, 126 are spaced along the torsion box in the spanwise direction according to a predetermined arrangement corresponding to an arrangement of the pairs of third and fourth mounting features 124, 126 on the respective FLE modules 100.

A method of assembling an aerofoil structure, such as an aircraft wing, shall now be described.

The FLE structure 100, which may be any of the FLE structural modules 100A, 100B, 100C, is supported by the FLE jig 140. The FLE structure 100 is brought together with the forward spar 21 of the torsion box assembly 20 (which is supported by torsion box jig 170) so as to align the fastener holes 34, 132 of the first mounting feature 30 and the third mounting feature 124.

It shall be appreciated that, alternatively, individual ribs 110 may be individually aligned in a one-by-one fashion, i.e. with a rib tooling instead of the FLE jig 140, to the respective first mounting features 30 provided on the forward spar 21 of the torsion box assembly 20.

Once the rib or ribs 110 of the FLE structure 100 are aligned with the torsion box assembly 20, and any necessary adjustment of the adjustable fastener holes 34 and/or 132 has been made, one or more fasteners 136 can be received within said fastener holes 34/132 for securing the ribs 110 to the forward spar 21 of the torsion box assembly 20.

A series of fastener holes are drilled at location X through the second mounting feature 32 and the fourth mounting feature 126 to form fastener holes 40 in the second mounting feature 32 and the fourth mounting feature 126 at each rib location.

Each fastener hole 40 extends through a respective one of the second mounting features 32 provided in the forward spar 21 and also through the corresponding fourth mounting feature 126 which is aligned with said second mounting feature 32 such that one or more fasteners 138 can be received within said fastener holes 40 for securing the ribs 110 to the forward spar 21 of the torsion box assembly 20.

Once the respective fastener holes 40 have been drilled through the second mounting features 32 provided in the forward spar 21 and also through the corresponding fourth mounting features 126 of the rib 110, rib(s) 110 may be brought out of contact with (or removed from) the forward spar 21 such that the respective fastener holes 40 can be cleaned in preparation for final assembly. Removal of the FLE structure 100 may require removal of fasteners 136 (which may be temporary fasteners). The adjustable fastener holes 34/132 may also be set at this time so as not to permit further adjustment. Alternatively, the fastener holes 40 may be clean reamed in situ without removing the ribs 110 from their aligned position with the torsion box assembly 20.

Optionally, one or more aircraft sub-systems 150 may be installed in the space 128 defined between the pairs of fittings 30, 32 provided on the forward spar 21. This may be done at any time between prior to first aligning the FLE structure 100, and before aligning the FLE structure 100 to the torsion box 20 for final assembly.

Once the respective fastener holes 40 have been cleaned, and optionally once the one or more aircraft sub-systems have been installed onto the space 128 provided between the respective fittings 30, 32 of the forward spar 21, the ribs 110 may be brought back into contact with the forward spar 21 such that the FLE structure 100 is re-aligned with the torsion box assembly 20.

Then, the fasteners 136, 138 are finally installed into the fastener hole(s) 34/132 and 40 so as to attach the FLE structure 100 to the forward spar 21 of the torsion box assembly 20, and thereby securing the FLE structure 100 to the aircraft wing 12.

By using a combination of part-to-part and hole-to-hole connections between the torsion box assembly 20 and the FLE structure 100, the method helps to reduce aerofoil assembly times and hence further improving production throughput.

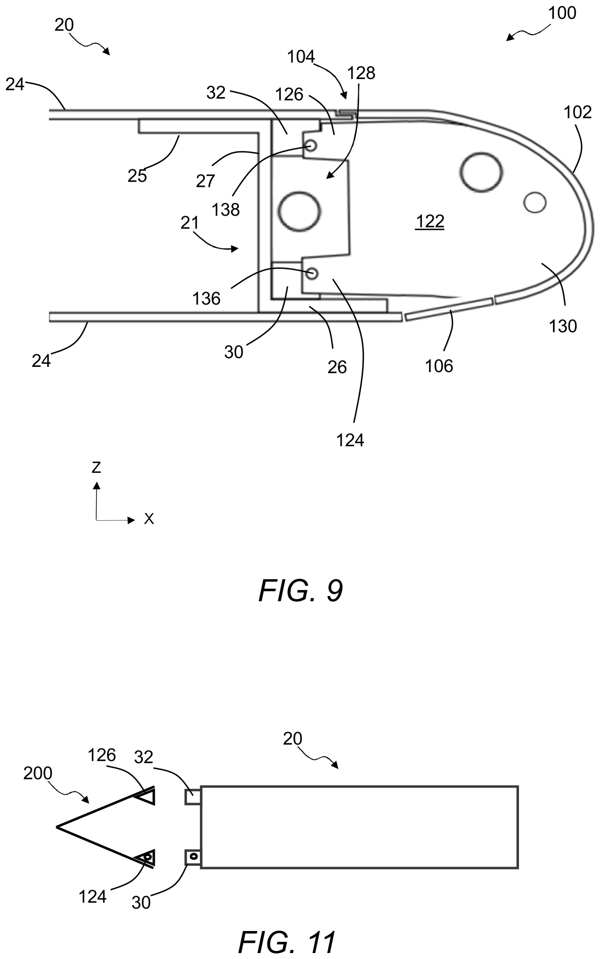

While in the above described embodiment the invention has been described in relation to joining a FLE structure 100 to a torsion box assembly 20, it will be appreciated that it is similarly applicable for joining a fixed trailing edge (FTE) structure 200 to a torsion box assembly 20 as shown in Figure 11.

Whilst the present invention has been described above in relation to an aircraft wing 12, it shall be appreciated that aspects of the present invention may also be used for the construction of other types of aerofoil structure be it on an aircraft or for use in wider non-aerospace applications.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A method for use in assembling an aerofoil structure, the method comprising:
providing a torsion box comprising a first mounting feature and a second mounting feature;
providing a fixed leading or trailing edge structure having a third mounting feature and a fourth mounting feature, wherein the first mounting feature and the third mounting feature each have a fastener hole prior to aligning the leading or trailing edge structure to the torsion box, and wherein the second mounting feature and the fourth mounting feature are without fastener holes for joining the torsion box to the fixed leading or trailing edge structure prior to aligning the leading or trailing edge structure to the torsion box;
aligning the fixed leading or trailing edge structure to the torsion box so as to align the fastener holes of the first mounting feature and the third mounting feature;
drilling through the second mounting feature and the fourth mounting feature to form fastener holes in the second mounting feature and the fourth mounting feature when the fixed leading or trailing edge structure is aligned with the torsion box;
installing a fastener through the fastener holes of the first mounting feature and the third mounting feature, and installing a fastener through the fastener holes of the second mounting feature and the fourth mounting feature, so as to join the fixed leading or trailing edge structure to the torsion box.

2. A method according to claim 1, further comprising adjusting a position and/or orientation of the fastener hole in the first mounting feature and/or third mounting feature.

3. A method according to claim 1 or claim 2, wherein the torsion box is supported by a first jig, and the fixed leading or trailing edge structure is supported by a second jig during the steps of aligning, drilling and installing fasteners.

4. A method according to claim 3, wherein the fixed leading or trailing edge structure is of a modular design, and the module during the steps of aligning and drilling comprises:
i) a partial structure of the fixed leading or trailing edge structure without an outer skin, or
ii) a complete structure of the fixed leading or trailing edge structure with an outer skin, or
iii) an equipped complete structure of the fixed leading or trailing edge structure with one or more systems for actuating a moveable device comprised in or mountable to the aerofoil structure and/or electrical, hydraulic and/or pneumatic systems.

5. A method according to claim 4, further comprising performing the method for a plurality of the modules spaced along the torsion box in the spanwise direction.

6. A method according to any of claims 1 to 5, further comprising cleaning the fastener holes in the second mounting feature and the fourth mounting feature prior to joining the fixed leading or trailing edge structure to the torsion box.

7. A kit of parts for forming an aerofoil structure including:
a torsion box, the torsion box having a first mounting feature and a second mounting feature, and
a fixed leading or trailing edge structure attachable to the torsion box, the leading or trailing edge structure having a third mounting feature and a fourth mounting feature,
wherein the first mounting feature and the third mounting feature each have a fastener hole prior to aligning the leading or trailing edge structure to the torsion box, and the fastener holes of the first mounting feature and the third mounting feature are configured to receive a fastener for joining the torsion box to the fixed leading or trailing edge structure, and
wherein the second mounting feature and the fourth mounting feature are without fastener holes for joining the torsion box to the fixed leading or trailing edge structure prior to aligning the leading or trailing edge structure to the torsion box.

8. A kit of parts according to claim 7, wherein at least one of the first mounting feature and third mounting feature include an adjustable fastener hole for adjusting a position and/or orientation of the fastener hole with respect to the first mounting feature or third mounting feature,
preferably wherein the adjustable fastener hole includes an eccentric bush.

9. A kit of parts according to any of claims 7 to 8, wherein when the leading or trailing edge structure is aligned with the torsion box, the second mounting feature and the fourth mounting feature are provided with aligned fastener holes configured to receive a fastener for joining the torsion box to the fixed leading or trailing edge structure; and/or
wherein the fastener holes of the first mounting feature and the third mounting feature have hole axes extending generally in a spanwise direction of the aerofoil structure; and/or
wherein the torsion box comprises a spar and the first mounting feature and the second mounting feature each comprise a fitting fixedly attached to a web part of the spar and extending outwardly from the web part of the spar.

10. A kit of parts according to any of claims 7 to 9, wherein the fixed leading or trailing edge structure comprises an outer skin, wherein the outer skin is configured such that the outer skin and an aerodynamic cover of the torsion box form a substantially smooth upper aerodynamic surface of the aerofoil structure when the fixed leading or trailing edge structure is attached to the torsion box, and
preferably wherein the first mounting feature and the third mounting feature are nearer the lower aerodynamic surface of the aerofoil structure than are the second mounting feature and the fourth mounting feature,
preferably wherein the outer skin has an opening configured to permit access to the first through fourth mounting features through the opening, and further comprising a cover panel configured to close the opening, wherein the cover panel is configured such that the cover panel and the outer skin form a substantially smooth aerodynamic surface when the cover panel is closing the opening.

11. A kit of parts according to any of claims 7 to 10, wherein the fixed leading or trailing edge structure comprises one or more systems for actuating a moveable device comprised in or mountable to the aerofoil structure and/or electrical, hydraulic and/or pneumatic systems.

12. A kit of parts according to claim 11 when dependent on claim 9, wherein the one or more systems are installed in the fixed leading or trailing edge structure after the second mounting feature and the fourth mounting feature have been provided with fastener holes, and preferably after the fastener holes have been cleaned.

13. A kit of parts according to any of claims 7 to 12, wherein the fixed leading or trailing edge structure is of a modular design.

14. A kit of parts according to any of claims 7 to 13, wherein the torsion box comprises one or more further pairs of first and second mounting features, and the fixed leading or trailing edge structure further comprises one or more further pairs of third and fourth mounting features, wherein the pairs of first and second mounting features are spaced along the torsion box in the spanwise direction according to a predetermined arrangement corresponding to an arrangement of the pairs of third and fourth mounting features on the fixed leading or trailing edge structure.

15. An aerofoil structure formed from the kit of parts according to any of claims 7 to 14.
